Europäisches Patentamt

European Patent Office

Office européen des brevets

(19)

(11) Numéro de publication : **0 118 324**
**B1**

(12)

# FASCICULE DE BREVET EUROPÉEN

(45) Date de publication du fascicule du brevet :
15.04.87

(21) Numéro de dépôt : 84400092.7

(22) Date de dépôt : 17.01.84

(51) Int. Cl.⁴ : **G 01 C 11/28**, G 06 F 15/20,
G 09 B 29/00

(54) Appareil indicateur de données topographiques enregistrées sur film, et son utilisation pour la navigation aérienne.

(30) Priorité : 25.01.83 FR 8301068

(43) Date de publication de la demande :
12.09.84 Bulletin 84/37

(45) Mention de la délivrance du brevet :
15.04.87 Bulletin 87/16

(84) Etats contractants désignés :
DE GB IT NL SE

(56) Documents cités :
EP-A- 0 059 120
FR-A- 2 321 725
US-A- 3 793 506

(73) Titulaire : THOMSON-CSF
173, Boulevard Haussmann
F-75379 Paris Cedex 08 (FR)

(72) Inventeur : Arnaud, Georges
THOMSON-CSF SCPI 173, bld Haussmann
F-75379 Paris Cedex 08 (FR)
Inventeur : Nico, Jean-Claude
THOMSON-CSF SCPI 173, bld Haussmann
F-75379 Paris Cedex 08 (FR)
Inventeur : Reymond, Jean-Claude
THOMSON-CSF SCPI 173, bld Haussmann
F-75379 Paris Cedex 08 (FR)

(74) Mandataire : Trocellier, Roger et al
THOMSON-CSF SCPI 19, avenue de Messine
F-75008 Paris (FR)

Jouve, 18, rue St-Denis, 75001 Paris, France

## Description

L'invention concerne un appareil indicateur de données topographiques enregistrées sur un film photographique, qui sont lues et visualisées sur un indicateur cathodique. Son utilisation est plus particulièrement envisagée pour la navigation aérienne.

Les indicateurs cartographiques présentent l'image d'une carte géographique aux pilotes de certains véhicules, en particulier dans le domaine aéronautique. Ces indicateurs cartographiques utilisent une carte géographique préalablement enregistrée sur un support optique, magnétique ou autre, analysée par une lecture pour sélectionner la zone utile de carte à visualiser et la traduire sous forme de signaux vidéo aptes à une visualisation sur un indicateur cathodique. La zone visualisée défile en correspondance avec le vol et son positionnement est asservi à la longitude et à la latitude de l'aéronef et éventuellement au cap. Outre la carte géographique, le dispositif de navigation est généralement agencé pour visualiser conjointement des repères et symboles pour indiquer le point figuratif de l'aéronef ainsi que des informations de navigation (vitesse, consommation de carburant, route à suivre, etc ...). Ces indicateurs cartographiques servent donc essentiellement à présenter aux pilotes d'avion la carte géographique de la zone survolée, mais ne présentent pas l'information d'altitude des points survolés.

Il est connu de représenter le relief sur des cartes géographiques en utilisant généralement des courbes de niveaux ou une famille de teintes dégradées qui correspondent chacune à une tranche déterminée d'altitude. Les coloris entre le jaune et le marron sont ainsi souvent utilisés pour représenter de manière croissante les différentes tranches successives d'altitudes positives. Ces types de cartes ne permettraient pas au pilote d'apprécier avec précision l'altitude des points survolés, le nombre de différentes tranches d'altitude étant souvent tel que chacune d'elles couvre plusieurs centaines de mètres.

Le but de l'invention est de traiter un levé précis d'altitude d'un territoire donné pour visualiser de manière fine l'altitude d'une série quelconque de points d'une zone de ce territoire. Ces points constituent, à titre d'exemple l'itinéraire d'un aéronef équipé de l'appareil.

On connaît par le document de brevet français FR-A-2 499 743 un indicateur cartographique permettant de visualiser l'image couleur d'une carte. Cet appareil comporte la carte mémorisée sur un support optique ou magnétique, en utilisant deux composantes chromatiques ou l'unique composante de luminance. Dans ce mode préféré, le support est un film noir et blanc dont les densités enregistrées correspondent aux différentes couleurs, en nombre limité, de la carte. Le capteur unique est une caméra TV noir et blanc associée à une source lumineuse, ou un photomultiplicateur associé à un tube analyseur à spot mobile appelé communément, selon l'appellation anglo-saxonne correspondante, flying-spot. La voie vidéo détectée est transmise après conversion analogique-numérique dans une mémoire morte programmée pour l'identification de la couleur lue et la restitution des composantes chromatiques conventionnelles rouge, verte et bleue de visualisation couleur selon une table de correspondance prédéterminée.

Une particularité de l'invention est d'utiliser comme support d'information un film photographique sur lequel est enregistré le levé précis d'altitude, ce film étant codé selon un grand nombre de teintes distinctes afin de couvrir avec une précision désirée la gamme totale d'altitude envisagée.

Suivant une autre particularité de l'invention, un circuit de traitement des signaux vidéo issus de la lecture du film délivre par une unique voie vidéo l'information décodée, permettant ainsi d'utiliser un simple tube cathodique noir et blanc pour visualiser les variations fines de l'altitude que présentent les différents points successivement analysés.

L'objet de l'invention est de réaliser un indicateur de données enregistrées sur un film photographique selon un codage de teintes prédéterminé, ces données correspondant à un levé déterminé, comportant :

un dispositif d'analyse dit lecteur vidéo pour sélectionner sur le film la partie utile à visualiser et délivrer les signaux vidéo correspondants, en forme de signaux analogiques,

un circuit de traitement comportant successivement des moyens de conversion analogique-numérique des signaux analogiques détectés, des moyens de décodage pour identifier la teinte en chaque point et lui faire correspondre la valeur numérique correspondante selon une table de correspondance inverse de celle utilisée à l'enregistrement du film, et des moyens de conversion numérique-analogique desdites valeurs numériques,

un dispositif de visualisation à tube cathodique des signaux décodés, et des moyens de commande pour élaborer des différents signaux de synchronisation et de commande, l'appareil étant caractérisé en ce que l'enregistrement du film est un levé d'altitude codé selon une pluralité de teintes afin de couvrir une gamme totale d'altitude avec une précision désirée, et que le circuit de traitement délivre à ce tube par une unique voie vidéo l'information décodée de manière à représenter les variations d'altitude des points successivement analysés.

Les particularités et avantages de l'invention apparaîtront dans la description qui suit, donnée à titre d'exemple non limitatif et illustrée par les figures annexées qui représentent :

figure 1, un diagramme d'un premier mode de réalisation d'un appareil indicateur selon l'invention, utilisant un film couleur ;

figure 2, un diagramme selon un deuxième mode de réalisation d'un appareil indicateur selon l'invention, utilisant un film noir et blanc ;

figure 3, un diagramme d'un dispositif d'enregistrement du film couleur utilisé dans un appareil selon la figure 1 ;

figure 4, un diagramme partiel d'une variante de réalisation d'un appareil indicateur conforme à l'invention ;

figure 5, un schéma relatif au calcul de paramètres de visualisation dans le cadre de la réalisation selon la variante de la figure 4 ;

figure 6, un exemple de visualisation de courbes de niveau dans le cadre de la variante selon les figures 4 et 5.

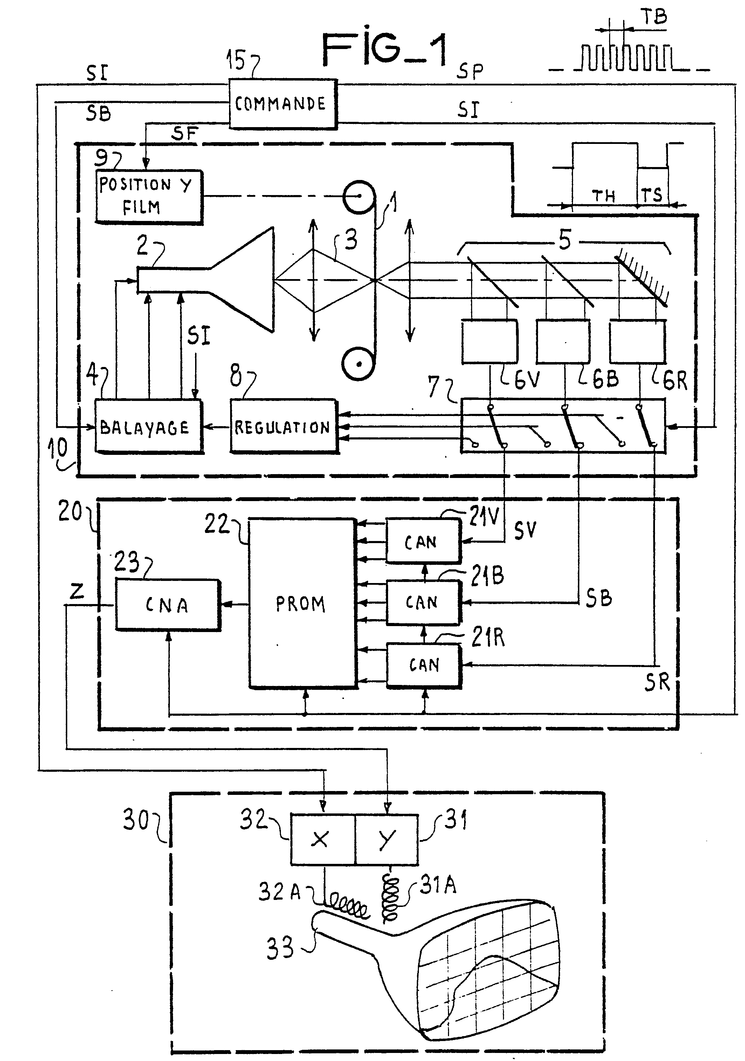

En référence à la figure 1, l'appareil indicateur illustré correspond à un mode préférentiel de réalisation car il fait appel à un film photographique 1 en couleurs pour supporter l'enregistrement des données topographiques, ce qui permet de stocker un nombre élevé de valeurs plus aisément que sur un film noir et blanc. Ces données sont constituées par un levé précis d'altitude d'un territoire. L'appareil indicateur comporte un lecteur vidéo 10, un circuit de commande 15, un circuit de traitement 20 et un dispositif de visualisation 30.

Le lecteur vidéo 10 comprend essentiellement, afin d'analyser le film couleur 1, un tube d'analyse 2 à spot mobile et ses circuits d'alimentation et de balayage 4. Le lecteur vidéo comprend également un séparateur trichrome 5, décomposant le faisceau 3 en trois faisceaux respectivement vert, bleu et rouge sur lesquels sont placés trois photodétecteurs 6V, 6B, 6R délivrant chacun un signal vidéo SV, SB, SR. Un dispositif commutateur 7 commandé permet le branchement d'une boucle de régulation 8 de l'intensité de la source lumineuse constituée par le spot du tube d'analyse 2. Un circuit d'asservissement 9 permet le positionnement vertical du film 1.

Le circuit de traitement 20 reçoit les trois signaux vidéo SV, SB, SR qui sont appliqués à l'entrée de trois convertisseurs analogiques-numériques, respectivement 21V, 21B, 21R. Les sorties numériques de ces convertisseurs sont branchées à l'entrée d'une mémoire morte programmée 22 ou mémoire PROM, qui reçoit ainsi un mot binaire auquel elle fait correspondre, selon une table de décodage, la valeur numérique d'altitude du point analysé. La sortie de la mémoire 22 est connectée à un unique convertisseur numérique-analogique 23 délivrant le signal vidéo qui est destiné à la visualisation.

Le dispositif de visualisation 30 comprend un tube cathodique 33 noir et blanc ; la déflexion du spot est commandée par un circuit de balayage horizontal 32 et un circuit de balayage vertical 31. Le signal de sortie vidéo Z du circuit de traitement 20 alimente le circuit de balayage vertical 31 afin de produire la tension de déflexion verticale du spot appliquée à la bobine correspondante 31A, ou à une plaque de déviation électromagnétique.

Le circuit de commande 15 élabore les différents signaux de commande et de synchronisation nécessaires au fonctionnement de l'ensemble. Ces signaux comprennent des signaux de balayage SB appliqués au circuit de balayage 4 du tube d'analyse 2 pour produire un balayage du type « cavalier », un signal SP ou synchronisation point par point des valeurs analysées, un signal de synchronisation image SI pour commander, d'une part le commutateur 7 et commuter périodiquement à la période image ou à une période multiple les sorties vidéo vers la boucle de régulation 8, et d'autre part le circuit de balayage horizontal 32 du tube de visualisation 33 et des signaux SF de commande de positionnement du film.

Pour faciliter la compréhension du fonctionnement de l'appareil, l'enregistrement du film est maintenant décrit. Le territoire concerné par le levé a été divisé, par exemple selon un quadrillage longitude-latitude, afin de définir des zones correspondant chacune à une image, chaque zone étant elle-même subdivisée en des surfaces élémentaires de dimensions limitées. Pour chacune d'elles une altitude a été relevée, en l'occurrence l'altitude moyenne. La gamme totale couverte par toutes les altitudes du territoire est alors divisée en tranches élémentaires ; à titre d'exemple on peut choisir un intervalle de dix mètres pour définir une tranche élémentaire.

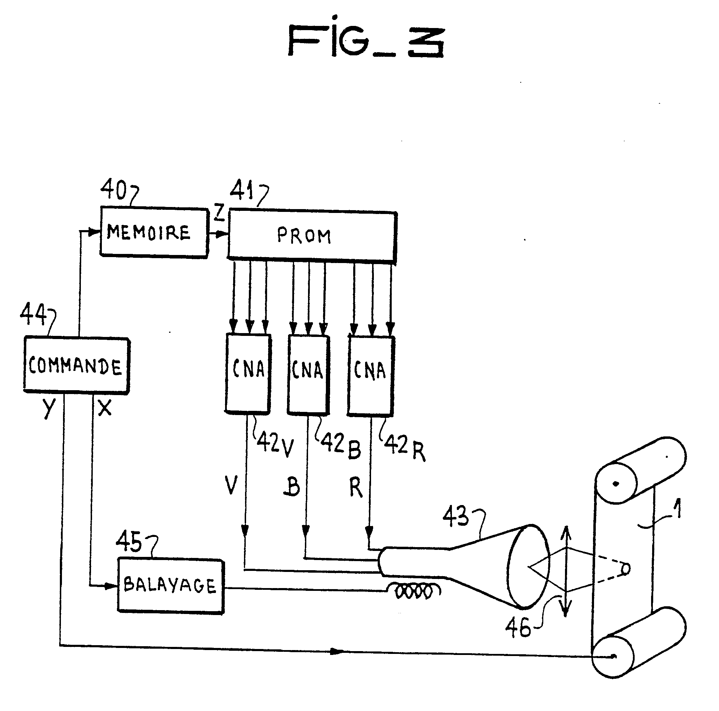

En se reportant à la figure 3, on introduit avec un adressage approprié dans une mémoire de masse 40 les valeurs d'altitude mesurées et converties en numérique. A chacune des tranches on fait correspondre une couleur distincte, selon la table de correspondance utilisée par l'intermédiaire d'une mémoire morte programmée 41 du type PROM. Cette mémoire produit une fonction de codage inverse à celle de décodage de la mémoire 22. Chaque couleur est définie par un pourcentage de bleu, un pourcentage de vert et un pourcentage de rouge. En relation avec l'exemple de réalisation illustré par la figure 1, huit niveaux de vert, huit niveaux de bleu et quatre niveaux de rouge peuvent être employés à l'enregistrement. On dispose ainsi de deux cent cinquante-six couleurs distinctes qui symbolisent autant d'altitudes différentes, et permettent de visualiser une dénivellation de deux mille cinq cent soixante mètres pour l'incrément de dix mètres considéré. Chacune des trois voies vidéo de sortie de la mémoire morte 41 alimente un convertisseur numérique-analogique respectivement 42V, 42B, 42R afin de commander un tube cathodique couleur 43 pour l'impression du film 1 à travers une optique de transport d'image 46. Un dispositif de commande 44 qui peut consister en un microprocesseur, un clavier et une console de visualisation synchronise ces différents éléments ainsi qu'un circuit de balayage horizontal 45 de balayage point par point du tube 43. Les couleurs correspondant respectivement aux valeurs d'altitude successivement extraites de la mémoire 40 sont ainsi enregistrées sur le film 1 sur une même ligne horizontale. Ce dispositif 44 commande également, à la fin de l'enregistrement d'une ligne, le déroulement vertical du film 1 pour passer à la ligne suivante de l'image considérée.

Un film monochrome noir et blanc peut donc être utilisé, une seule composante de luminance étant utilisée pour modifier la densité du film. Dans ce concept la mémoire morte programmée 41 ne comporte qu'une seule voie vidéo de sortie, il n'y a qu'un seul convertisseur numérique-analogique et la voie vidéo correspondante est appliquée à un tube cathodique monochrome.

Le fonctionnement de l'appareil indicateur illustré sur la figure 1 est le suivant. Le circuit d'asservissement 9 régulant le positionnement vertical du film 1 est commandé par le circuit de commande 15 pour sélectionner l'image du film à exposer au faisceau 3 du tube d'analyse 2. Le circuit de commande 15 comprend un processeur, tel un microprocesseur, qui élabore les signaux de commande et de synchronisation. Ces signaux SB sont appliqués au circuit de balayage en 4 pour dévier en X et Y le faisceau le long du parcours à analyser.

Les moyens de balayage 15 et 4 produisent un balayage cavalier ; le balayage du faiscau 3 s'effectue selon une suite de vecteurs élémentaires le long du parcours, ou des parcours successifs à analyser. On considère que chaque balayage comporte un nombre fini déterminé N de vecteurs élémentaires. La durée de balayage d'un vecteur élémentaire correspond à la période TP du signal de synchronisation point SP. La durée du balayage est donc donnée par la valeur TH égale à n fois TP. Ce balayage est reproduit à la période TI d'image = TH+TS, la durée TS de suppression pouvant être utilisée pour commuter le circuit 7 et entraîner la régulation par le circuit 8, ou pour produire une visualisation de symboles à l'aide d'un générateur de symboles non figuré. Il faut en effet considérer que la régulation n'a pas lieu d'être branchée systématiquement durant chaque intervalle TS de suppression.

L'optique précédant le film 1 produit un transport d'image de spot lumineux au niveau du film 1. La lumière du faisceau lumineux 3 est modifiée par la transparence et la couleur du point analysé du film 1, et est reprise par une autre optique pour être transmise au séparateur trichrome 5 qui sélectionne les trois composantes lumineuses verte, bleue et rouge. Les trois photodétecteurs 9V, 9B, 9R peuvent être des photomultiplicateurs. Le commutateur triple 7 et la boucle de régulation 8 permettent d'agir sur l'alimentation en 4, de façon à ce que l'intensité lumineuse du faisceau 3 reste sensiblement constante. Dans le circuit de traitement 20 les trois signaux SV, SB, SR sont convertis numériquement sous forme binaire. Dans l'exemple traité, cette conversion se traduit par trois bits pour le vert, trois bits pour le bleu et deux bits pour le rouge. Un mot de huit bits ainsi formé identifie la couleur du point lu et est introduit dans la mémoire morte 22 où il est remplacé par la valeur numérique de l'altitude correspondante du point analysé à l'instant considéré. Cette valeur est convertie en un signal analogique Z par l'unique convertisseur numérique-analogique 23. Le signal Z est appliqué au circuit de balayage vertical 31 qui peut comporter un amplificateur à gain variable pour adapter la déflexion verticale à l'échelle désirée.

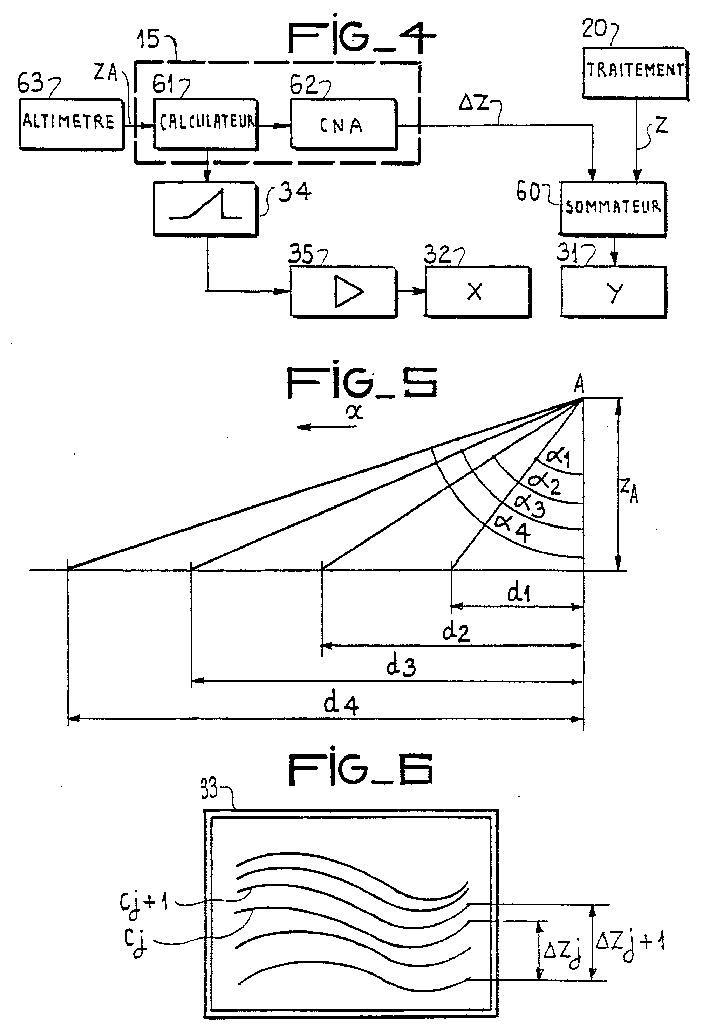

Le circuit de balayage horizontal 32 synchronisé par le signal SI est équipé d'un circuit générateur de tension en dents de scie 34 (figure 4). Ce générateur peut être suivi d'un amplificateur à gain réglable 35 pour régler de même à l'échelle désirée l'amplitude du balayage vertical. Pour visualiser des symboles durant les intervalles de suppression les circuits de balayage 31 et 32 devront recevoir des signaux correspondant du circuit 15 ce qui entraîne en particulier un circuit de commutation sur la liaison Z allant au circuit 31.

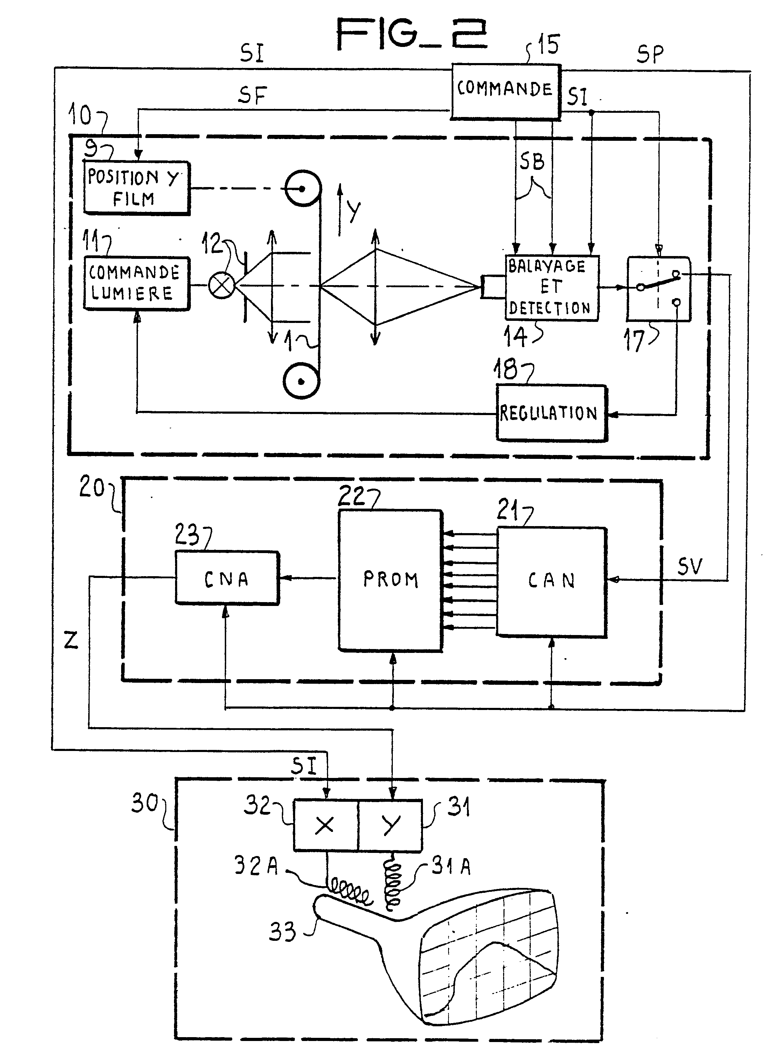

La figure 2 représente un mode de réalisation pour lequel le film 1 est monochrome, noir et blanc ; les altitudes se trouvent stockées selon différents niveaux de gris qui sont prédéterminés en relation avec les différentes tranches d'altitude à traduire. Chaque tranche d'altitude $Z_i$ est affectée à une valeur de densité $D_i$ déterminée du film, c'est-à-dire à un certain niveau de gris dans une gamme, s'étendant de préférence du noir au blanc. Le dispositif de lecture comporte une source ponctuelle lumineuse fixe 12 avec son alimentation 11, des éléments optiques pour collimater la source et pour transporter l'image de la zone éclairée au niveau des moyens de photodétection et d'analyse 14 sensibles uniquement à l'intensité de la lumière. Ces moyens sont commandés par le circuit de commande 15 et peuvent consister en une simple caméra TV noir et blanc. Un interrupteur simple 17 permet à une boucle de stabilisation 18 semblable à celle 8 précitée de contrôler le circuit d'alimentation 11. Le signal vidéo SV du dispositif de lecture 10 est ensuite traité dans un circuit de traitement 20 qui ne diffère de celui utilisé dans la version précédente que par le fait qu'un seul convertisseur analogique-numérique 21 est nécessaire à l'entrée pour alimenter la mémoire morte programmée 22. Tous les autres éléments de cette figure sont identiques à ceux utilisés dans le mode de réalisation de la figure 1 et ont les mêmes références.

Selon une variante de réalisation on commande par le circuit de commande 15 le balayage du faisceau d'analyse plusieurs parcours distincts sur le film. Ceci permet de visualiser simultanément plusieurs coupes de terrain sur l'écran du tube 33. Ces différents parcours d'analyse pourront se situer dans les plans perpendiculaires à la direction de l'aéronef et être de plus en plus éloignés de celui-ci. La visualisation de ce parcours est obtenue en décalant ces coupes de terrain les unes par rapport aux autres selon l'axe vertical du tube 33. Cette visualisation peut produire une impression de perspective du terrain se présentant devant l'aéronef.

En référence à la figure 4 cette variante utilise un sommateur analogique 60 recevant par une première entrée le signal de sortie vidéo Z des circuits de traitement 20, et par une deuxième entrée un signal de décalage ΔZ issu du circuit de commande 15. Le signal ΔZ de décalage des coupes, proportionnel à la distance séparant les courbes les unes des autres sur le film peut être déterminé par programmation préalable en 15 pour obtenir une loi de décalage déterminée.

Pour améliorer le confort de la vision, accroître le réalisme de l'image en renforçant l'impression de perspective et la notion de relief du terrain on pourra déterminer les décalages des coupes de la manière suivante en se reportant aux figures 5 et 6.

Les courbes perpendiculaires à la direction x de l'aéronef sont à des distances respectives d1, d2, d3, d4 de la verticale du point A représentant la position de l'aéronef. Ces différentes coupes définissent des angles croissants avec la distance d.

En élaborant un signal de la forme $\Delta Z = K \times \text{Arc tg } (d/Z_A)$ où d est la distance d'éloignement du plan de coupe, la visualisation obtenue s'apparente au panorama vu du point A. Dans l'expression précitée K est une constante. Ce signal peut être élaboré aisément par des moyens de calcul 61 faisant partie du circuit de commande 15. Dans le cas d'un matériel aéroporté il s'agira d'un calculateur de bord. Ce signal est converti en analogique par un circuit de conversion numérique-analogique 62. Le bloc 63 représente un altimètre mesurant l'altitude instantanée $Z_A$ de l'aéronef, cette donnée étant fournie au calculateur 61.

La figure 6 visualise différentes courbes Cj, Cj + 1 et les décalages verticaux successifs ΔZj, ΔZj + 1, ...

Pour l'élaboration d'un balayage cavalier on pourra se reporter au brevet français FR-A-2 218 646 ; pour le problème de régulation de la luminance on pourra se reporter au brevet français FR-A-2 499 743.

**Revendications**

1. Appareil indicateur de données enregistrées sur un film photographique (1) selon un codage de teintes prédéterminé, ces données correspondant à un levé déterminé, comportant :

un dispositif d'analyse dit lecteur vidéo (10) pour sélectionner sur le film la partie utile à visualiser et délivrer les signaux vidéo correspondants, en forme de signaux analogiques (Z),

un circuit de traitement (20) comportant successivement des moyens de conversion analogique-numérique des signaux analogiques (Z) détectés, des moyens de décodage pour identifier la teinte en chaque point et lui faire correspondre la valeur numérique correspondante selon une table de correspondance inverse de celle utilisée à l'enregistrement du film, et des moyens de conversion numérique-analogique desdites valeurs numériques,

un dispositif de visualisation à tube cathodique (30) des signaux décodés,

et des moyens de commande pour élaborer des différents signaux de synchronisation et de commande (15), l'appareil étant caractérisé en ce

que l'enregistrement du film (1) est un levé d'altitude codé selon une pluralité de teintes afin de couvrir une gamme totale d'altitude avec une précision désirée, et que le circuit de traitement (20) délivre à ce tube par une unique voie vidéo l'information décodée de manière à représenter les variations d'altitude des points successivement analysés.

2. Appareil indicateur selon la revendication 1, caractérisé en ce que les signaux analogiques (Z) formant ladite voie vidéo en sortie représentent lesdites variations l'altitude des points successifs analysés et sont utilisés pour former un premier signal de déflexion pour la déviation du faisceau du tube cathodique (33) de visualisation.

3. Appareil indicateur selon l'une quelconque des revendications précédentes, caractérisé en ce que le tube cathodique (33) de visualisation est un tube monochrome et que les moyens de décodage sont constitués par une mémoire morte (22) programmée pour constituer une table de correspondance d'altitude.

4. Appareil indicateur selon la revendication 1 ou 2, caractérisé en ce que les différentes altitudes sont enregistrées sur un film photographique couleur (1) sous la forme d'une pluralité de couleurs correspondant à différentes tranches d'altitude à visualiser, le lecteur vidéo (10) délivrant trois signaux, chacun sur une voie vidéo différente correspondant aux trois composantes chromatiques.

5. Appareil indicateur selon la revendication 1, 2 ou 3, caractérisé en ce que les différentes altitudes sont enregistrées sur le film photographique (2) qui est monochrome noir et blanc sous la forme d'une pluralité de densités de gris correspondant aux différentes tranches d'altitude à visualiser, le lecteur vidéo (10) délivrant un seul signal sur une seule voie vidéo.

6. Appareil indicateur selon la revendication 4 ou 5, caractérisé en ce qu'il comporte des moyens de balayage pour analyser le film (1) utilisant un balayage cavalier le long d'au moins un parcours d'analyse envisagé et pour visualiser en synchronisme la variation d'altitude correspondante sur l'écran du tube de visualisation (33).

7. Appareil indicateur selon la revendication 2 et l'une quelconque des revendications 3, 4, 5 ou 6, caractérisé en ce que les moyens de commande comportent un circuit générateur de signaux comportant un signal (SB) de commande de balayage cavalier, des signaux (SF) de commande de positionnement du film (1), un signal de synchronisation point par point (SP) pour commander le circuit de traitement (20) et un signal de synchronisation image (S1) pour former un deuxième signal de déflexion du tube cathodique (33) du dispositif de visualisation (30) et synchroniser le balayage de ce tube avec celui du dispositif d'analyse (10).

8. Appareil indicateur selon l'une quelconque des revendications précédentes, caractérisé en ce qu'il comprend un sommateur analogique (60) dont une première entrée est connectée à la sortie du circuit de traitement (20) pour recevoir lesdits signaux analogiques d'altitude (Z) et une deuxième entrée est connectée à une sortie du circuit de commande (15) pour recevoir un signal de décalage (ΔZ), le circuit de commande (15) comportant des moyens de calcul (61) dudit signal de décalage, la sortie du sommateur étant connectée audit dispositif de visualisation (30) pour produire ledit premier signal de déflexion (Z + ΔZ) pour décaler les différentes courbes de niveaux (Cj, Cj + 1, ...) constituées par les variations d'altitude visualisées sur l'écran du tube cathodique (33) selon plusieurs parcours d'analyse sur le film (1) correspondant à différents plans de coupe.

9. Appareil indicateur selon l'une quelconque des revendications 1, 2, 4, 7 ou 8, caractérisé en ce que le film photographique 1 est enregistré au moyen d'une mémoire morte programmée (41) recevant les valeurs d'altitude successives d'une mémoire de masse (40) pour faire correspondre à chacune d'elles un code couleur selon la table de correspondance, les sorties codées étant converties pour produire trois signaux vidéo couleur, d'un tube cathodique couleur (43) et d'une optique associée (46) pour effectuer l'enregistrement à partir des signaux vidéo couleur, la déviation du faisceau étant commandée horizontalement et le film (1) déplacé verticalement à la fin de chaque balayage ligne.

10. Appareil selon la revendication 8 utilisé pour visualiser des courbes de niveau dans un système indicateur de navigation aérienne d'un aéronef, caractérisé en ce qu'un altimètre (63) fournit l'altitude instantanée $Z_A$ de l'aéronef auxdits moyens de calcul (61) qui élaborent ledit signal de décalage (ΔZ) sous la forme : $K \times Arc\ tg\ (d/Z_A)$ où K est une constante et où d représente à chaque fois la distance réelle d'un plan de coupe, de la verticale de la position de l'aéronef.

**Claims**

1. Apparatus for displaying data recorded on a photographic film (1) according to a predetermined tone coding, these data corresponding to a determined measurement collection, comprising :

an analyzing device referred to as a video reader (10) to select from the film the useful portion to be visualized and to supply the corresponding video signals in the form of analog signals (Z),

a processing circuit (20) successively comprising analog-digital conversion means to convert the detected analog signals (Z), decoding means to identify the tone of each point and to establish correspondence between the latter and a digital value in accordance with a correspondence table inverted with respect to that used for the recording of the film, and digital-analog conversion means for converting said digital values,

a device for the visualization of the decoded signals comprising a cathode ray tube (30),

and control means to generate the various synchronization and control signals (15), the apparatus being characterized in that the recording of the film (1) is an altitude measurement collection coded according to a plurality of tones in order to cover a total altitude range with a desired precision, and that the processing circuit (20) supplies decoded video information to this tube through a single video channel in a manner to represent the altitude variations of the successively analyzed points.

2. Display device according to claim 1, characterized in that the analog signals (Z) forming said output video channel represent said altitude variations of the successive analyzed points and are used to form a first deflection signal for the deflection of the beam of the cathode ray visualization tube (33).

3. Display device according to any of the preceding claims, characterized in that the visualization cathode ray tube (33) is a monochromatic tube and that the decoding means are constituted by a read only memory (22) programmed to constitute an altitude correspondence table.

4. Display device according to claims 1 or 2, characterized in that the different altitudes are recorded on a photographic color film (1) as a plurality of colors corresponding to different altitude sections to be visualized, the video reader (10) supplying three signals, each on a different video channel corresponding to the three chromatic components.

5. Display device according to claims 1, 2 or 3, characterized in that the different altitudes are recorded on the photographic film (2) which is monochromatic black and white in the form of a plurality of densities corresponding to the different altitude sections to be visualized, the video reader (10) supplying a single signal on a single video channel.

6. Display device according to claims 4 or 5, characterized in that it comprises scanning means for analyzing the film (1) using a cavalier scanning along at least one intended analyzing path and for visualizing in synchronism with the corresponding altitude variation on the screen of the visualization tube (33).

7. Display apparatus according to claim 2 and any of claims 3, 4, 5 or 6, characterized in that the control means comprise a circuit for generating signals comprising a cavalier scanning control signal (SB), signals (SF) for controlling the film position (1), a point by point synchronization signal (SP) for controlling the processing circuit (20) and an image synchronization signal (S1) to form a second deflection signal of the cathode ray tube (33) of the visualization device (30) and synchronizing the deflection of this tube with that of the analyzing device (10).

8. Display apparatus according to any of the preceding claims, characterized in that it comprises an analog summer (60) a first input of which is connected to the output of the processing circuit (20) to receive said analog altitude signals (Z) and a second input of which is connected to an output of the control circuit (15) to receive a shift signal ($\Delta Z$), the control circuit (15) comprising means (61) for calculating said shift signal, the output of the summer being connected to said visualization device (30) to produce said first deflection signal ($Z + \Delta Z$) to shift the different level curves ($Cj$, $Cj + 1$, ...) constituted by the altitude variations visualized on the screen of the cathode ray tube (33) along a plurality of analyzing paths on the film (1) corresponding to different sectional planes.

9. Display apparatus according to any of claims 1, 2, 4, 7 or 8, characterized in that the photographic film 1 is recorded by means of a programmed read only memory (41) receiving the successive altitude values from a mass memory (40) to establish correspondence between each of them and a color code according to the correspondence table, the coded outputs being converted to produce three color video signals of a color cathode ray tube (43) and the associated optical system (46) to perform the recording from the color video signals, the deflection of the beam being controlled horizontally and the film (1) being displaced vertically at the end of each deflection line.

10. Apparatus according to claim 8, used for the visualization of level curves in an airborne navigation display system, characterized in that an altimeter (63) supplies the instantaneous altitude $Z_A$ of the airplane to said calculating means (61) which generate said shift signal ($\Delta Z$) in the shape : $K \times Arc\ tg\ (d/Z_A)$ wherein K is a constant and wherein d represents each respective real distance of a sectional plane from the vertical position of the airplane.

**Patentansprüche**

1. Gerät zum Anzeigen von Daten, die auf einem photographischen Film (1) mit einer vorbestimmten Farbcodierung aufgezeichnet sind, wobei diese Daten einer bestimmten Meßwertaufnahme entsprechen, mit :

einer Analysevorrichtung, die als Videolesegerät (10) bezeichnet wird, um auf dem Film den nutzbaren, zur Sichtanzeige zu bringenden Teil auszuwählen und die entsprechenden Videosignale in Form von Analogsignalen (2) auszugeben,

einer Verarbeitungsschaltung (20), die nacheinander Mittel zur Analog/Digital-Umsetzung der erfaßten Analogsignale (2), Decodiermittel zum Identifizieren des Farbtons an jedem Punkt und zur Zuweisung eines entsprechenden Digitalwertes gemäß einer Korrespondenztabelle, die entgegengesetzt zu der bei der Aufzeichnung des Films verwendeten ist, und Mittel zur Digital/Analog-Umsetzung der genannten Digitalwerte umfaßt,

eine Kathodenstrahlröhren-Sichtanzeigevorrichtung (30) zur Darstellung der decodierten Signale,

und Steuermittel zur Erzeugung der verschiedenen Synchronisations- und Steuersignale (15), wobei das Gerät dadurch gekennzeichnet ist, daß die Aufzeichnung des Films (1) eine Höhenmeßwertaufnahme in einer Mehrzahl von Farbtönen ist, um einen gesamten Höhenbereich mit der gewünschten Präzision zu überdecken, und daß die Verarbeitungsschaltung (20) der Röhre die decodierte Information über einen einzigen Videokanal in solcher Weise zuführt, daß die Höhenvariationen der nacheinander analysierten Punkte dargestellt werden.

2. Anzeigegerät nach Anspruch 1, dadurch gekennzeichnet, daß die Analogsignale (Z), welche den genannten Videokanal ausgangsseitig bilden, die genannten Höhenvariationen der nacheinander analysierten Punkte darstellen und verwendet werden, um ein erstes Ablenksignal für die Ablenkung des Bündels der Sichtanzeige-Kathodenstrahlröhre (33) zu bilden.

3. Anzeigegerät nach einem der vorstehenden Ansprüche, dadurch gekennzeichnet, daß die Sichtanzeige-Kathodenstrahlröhre (33) eine einfarbige Röhre ist und daß die Decodiermittel durch einen Festwertspeicher (22) gebildet sind, der so programmiert ist, daß er eine Höhen-Entsprechungstabelle bildet.

4. Anzeigegerät nach Anspruch 1 oder 2, dadurch gekennzeichnet, daß die Höhenunterschiede auf einem photographischen Farbfilm (1) in Form mehrerer Farben aufgezeichnet sind, welche verschiedenen darzustellenden Höhenabschnitten entsprechen, wobei das Videolesegerät (10) drei Signale ausgibt, jedes auf einem verschiedenen Videokanal, entsprechend den drei Farbkomponenten.

5. Anzeigegerät nach Anspruch 1, 2 oder 3, dadurch gekennzeichnet, daß die Höhenunterschiede auf dem photographischen Schwarz/Weiß-Film (2) in Form einer Mehrzahl von Grautönen aufgezeichnet werden, welche den verschiedenen darzustellenden Höhenabschnitten entsprechen, wobei das Videolesegerät (10) ein einziges Signal auf einem einzigen Videokanal ausgibt.

6. Anzeigegerät nach Anspruch 4 oder 5, dadurch gekennzeichnet, daß es Ablenkmittel zur Analyse des Films (1) unter Anwendung einer Kavalierablenkung entlang wenigstens einer beabsichtigten Analysebahn und zur synchronen Sichtdarstellung der entsprechenden Höhenvariation auf dem Schirm der Sichtanzeigeröhre (33) umfaßt.

7. Anzeigegerät nach Anspruch 2 und einem der Ansprüche 3, 4, 5 oder 6, dadurch gekennzeichnet, daß die Steuermittel eine Generatorschaltung zur Erzeugung von Signalen umfassen, wozu ein Kavalierablenksteuersignal (SB), Steuersignale (SF) für die Positionierung des Films (1), ein Punkt-für-Punkt-Synchronisationssignal (SP) zum Steuern der Verarbeitungsschaltung (20) und ein Bildsynchronisationssignal (S1) zur Erzeugung eines zweiten Ablenksignals für die Kathodenstrahlröhre (33) der Sichtanzeigevorrichtung (30) und Synchronisierung der Ablenkung dieser Röhre mit der der Analysevorrichtung (10) gehören.

8. Anzeigegerät nach einem der vorstehenden Ansprüche, dadurch gekennzeichnet, daß es einen Analogsummierer (60) umfaßt, wovon ein Eingang mit dem Ausgang der Verarbeitungsschaltung (20) verbunden ist, um die genannten analogen Höhensignale (Z) zu empfangen, und wovon ein zweiter Eingang mit einem Ausgang der Steuerschaltung (15) verbunden ist, um ein Versetzungssignal (ΔZ) zu empfangen, wobei die Steuerschaltung (15) Mittel (61) zur Berechnung des Versetzungssignals umfassen, wobei ferner der Ausgang des Summierers mit der Sichtanzeigevorrichtung (30) verbunden ist, um das genannte erste Ablenksignal (Z + ΔZ) zu erzeugen und die verschiedenen Niveaukurven (Cj, CJ + 1, ...) zu versetzen, welche durch die Höhenvariationen gebildet sind, die auf dem Schirm der Kathodenstrahlröhre (33) entsprechend mehreren Analysedurchläufen auf dem Film (1), welche verschiedenen Schnittebenen entsprechen, gebildet sind.

9. Anzeigegerät nach einem der Ansprüche 1, 2, 4, 7 oder 8, dadurch gekennzeichnet, daß der photographische Film 1 mittels eines programmierten Festwertspeichers (41) aufgezeichnet wird, der die aufeinanderfolgenden Höhenwerte aus einem Massenspeicher (40) empfängt, um eine Entsprechung zwischen jedem von ihnen und einem Farbcode gemäß der Entsprechungstabelle herzustellen, wobei die codierten Ausgangsgrößen umgesetzt werden, um drei Farbvideosignale einer Kathodenstrahl-Farbröhre (43) und einer zugeordneten Optik (46) zur Aufzeichnung ausgehend von den Farbvideosignalen zu erzeugen, wobei die Ablenkung des Bündels in Horizontalrichtung gesteuert wird und der Film (1) am Ende jeder Abtastzeile vertikal verschoben wird.

10. Gerät nach Anspruch 8, angewendet zur Sichtdarstellung von Niveaukurven in einem Luftnavigationsanzeigesystem eines Flugzeugs, dadurch gekennzeichnet, daß ein Höhenmesser (63) die Augenblickshöhe $Z_A$ des Flugzeugs an die genannten Rechenmittel (61) liefert, die das Versetzungssignal (ΔZ) in folgender Form erzeugen : $K \times Arc\ tg\ (d/Z_A)$, worin K eine Konstante ist und worin d jeweils den reellen Abstand einer Schnittebene von der Vertikalen der Flugzeugposition darstellt.

FIG_1

# FIG_2

# FIG_3

# FIG_4

**63** ALTIMETRE

ZA

**15**

**61** CALCULATEUR → **62** CNA

$\Delta Z$

**20** TRAITEMENT

Z

**34**

**60** SOMMATEUR

**35** ▷ → **32** X

**31** Y

# FIG_5

α

A

$\alpha_1$
$\alpha_2$
$\alpha_3$
$\alpha_4$

$z_A$

$d_1$
$d_2$
$d_3$
$d_4$

# FIG_6

**33**

$c_{j+1}$
$c_j$

$\Delta z_j$ | $\Delta z_{j+1}$